# EUROPÄISCHE PATENTSCHRIFT

(11) **EP 1 760 855 B1**
(45) Veröffentlichungstag und Bekanntmachung des Hinweises auf die Patenterteilung: **29.10.2008**
(21) Anmeldenummer: 06015740.1
(22) Anmeldetag: 28.07.2006
(51) Int. Cl.: H02G 13/00

(54) **Blitzstromableitvorrichtung**
Lightning current conducting device
Dispositif de dérivation de courant de foudre

(30) Priorität: 30.08.2005 DE 102005041167
(43) Veröffentlichungstag der Anmeldung: 07.03.2007
(73) Patentinhaber: OBO Bettermann GmbH & Co. KG, 58710 Menden (DE); ABB Schweiz AG, 5400 Baden (CH)
(72) Erfinder: Trinkwald, Jürgen, 58708 Menden (DE); Greuter, Felix, 5466 Baden-Rütihof (CH); Donzel, Lise, 5430 Wettingen (CH); Richter, Bernhard, 5430 Wettingen (CH); Hagemeister, Michael, 8006 Zürich (CH)
(74) Vertreter: Köchling, Conrad-Joachim

(56) Entgegenhaltungen:
- JP-A- 2001 023 793
- JP-A- 2001 023 794
- US-A- 4 851 955

## Beschreibung

Die Erfindung betrifft eine Blitzstromableitvorrichtung, bestehend aus einer Fangeinrichtung, die über einen elektrischen Leiter mit einer Erdungsanlage verbunden ist, wobei der elektrische Leiter von einer Isolierung umgeben ist, wobei die Isolierung von einer in Längsrichtung durchgehenden Schicht aus einem Material umgeben ist, das ein nicht-lineares elektrische verhalten aufweist.

Vorrichtungen dieser Art sind aus der JP 2001 023 794 A und der JP 2001 023 793 A bekannt.

Ähnliche Vorrichtungen sind im Stand der Technik bekannt. Es wird hierzu beispielsweise auf die die DE 102 28 665 B4 und die DE 102 33 528 A1 verwiesen.

Der Blitzschutz von Gebäuden wird im Stand der Technik durch ein äußeres Blitzschutzsystem und ein inneres Blitzschutzsystem realisiert, wie dies weitgehend in der Norm DIN V VDE V 0185 beschrieben ist.

Das äußere Blitzschutzsystem dient dem Auffangen einer Blitzentladung mit Hilfe einer Fangeinrichtung und der Ableitung des Blitzstromes in das Erdreich. Üblicherweise besteht ein äußeres Blitzschutzsystem aus einer Fangeinrichtung auf einem Gebäude, die an einer Ableitungseinrichtung angeschlossen und mit einer Erdungsanlage verbunden wird. Eine Fangeinrichtung kann auch eine natürliche Fangeinrichtung, bestehend beispielsweise aus einem Metalldach sein. Eine Ableitungseinrichtung kann auch eine natürliche Ableitungseinrichtung, bestehend aus beispielsweise einer metallischen Fassade sein. Ableitungseinrichtungen eines äußeren Blitzschutzsystems werden im Allgemeinen als freistehende blanke metallische Leitungen aus Kupfer, Aluminium, Edelstahl oder verzinktem Stahl auf und an einem Gebäude angebracht und können den Blitzstrom zur Erdungsanlage abführen. Solche Leitungen werden in Halterungen aus Kunststoff oder Metall an dem Gebäude befestigt. Bei einem Blitzeinschlag in ein konventionelles äußeres Blitzschutzsystem induziert der Blitzstrom in der offenen Leiterschleife, die durch einen im Abstand von der Ableitung verlaufenden und geerdeten Leiter gebildet wird, nach dem Induktionsgesetz eine Spannung. Insbesondere bei

Folgeblitzen ist die Stromänderung über der Zeit besonders groß und erreicht Werte bis zu 200 kA/ps.

Folgeblitze können auch mehrfach nacheinander auftreten. Demzufolge wirkt die induzierte Spannung auch mehrfach nacheinander im Abstand von einigen 10 bis 100 ms. Die induzierte Spannung kann dabei Werte bis zu einigen 100 kV bis 1000 kV erreichen. Dabei kann sowohl eine reine Luftstrecke als auch eine Kombination von Luftstrecke und festem Material durchschlagen werden. Der als Folge des Durchschlages in den metallischen Teil der Leiterschleife und seine Verbindung zur Erdungsanlage eingekoppelte Blitzteilstrom kann durch den im Durchschlagsbereich wirkenden Lichtbogen zu einem Feuer führen, wenn in der Durchschlagsstrecke brennbares Material vorhanden ist und die Zündenergie für die Entflammung des Materials aus der im Lichtbogen umgesetzten Wärmeenergie bereit gestellt werden kann. Wenn die Verbindung des metallischen Gegenstandes mit der Erde nicht blitzstromtragfähig ist, kann es aufgrund der Temperaturerhöhung der Verbindung ebenfalls zu einem Brand kommen. Handelt es sich bei dem metallischen Gegenstand um eine elektrische Anlage, die an die Stromversorgung des Gebäudes oder an andere informationstechnische Einrichtungen angeschlossen ist, so wird ein Blitzteilstrom eingekoppelt, der die elektrischen Einrichtungen zerstören und auch da zu einem Brand führen kann.

Zur Vermeidung der Wirkung solcher oben beschriebener Näherungen wird der Abstand zwischen der Ableitung eines äußeren Blitzschutzsystems und einem metallischen Gegenstand nach der Norm durch Einhaltung eines Sicherheitsabstandes erreicht, wodurch ein elektrischer Durchschlag über den Sicherheitsabstand vermieden wird. Bei gewöhnlichen Gebäuden ist die Einhaltung des Sicherheitsabstandes durch entsprechende Abstandshalter zu erreichen. In besonderen Fällen kann jedoch der notwendige Sicherheitsabstand aus Gründen der Anordnung eines Gebäudes oder aus architektonischen und ästhetischen Gesichtpunkten nicht eingehalten werden. In diesen Fällen kann vorteilhaft eine elektrisch isolierte blitzstromtragfähige Ableitung verwendet werden, deren Isolation so bemessen ist, dass es trotz eines wesentlich kleineren Abstands als die Norm bestimmt, zu keinem Überschlag zwischen der Ableitung und einem benachbarten metallischen Gegenstand kommt. Eine solche elektrische Isolation der Ableitung kann beispielsweise durch eine Ummantelung eines elektrischen Leiters der Ableitung mit einem aus der Kabeltechnik bekannten Isolierstoff wie VPE erfolgen. Beispielsweise kann man ein handelsübliches isoliertes Kabel verwenden. Der isolierte Leiter der Ableitungseinrichtung führt den Blitzstrom isoliert von allen metallisch benachbarten Teilen zur Erde ab. Eine solche Lösung ist in dem eingangs bezeichneten Stand der Technik angegeben.

Die alleinige Verwendung eines isolierten Leiters als Ableitung birgt jedoch Nachteile. Die elektrische Feldstärke am Rand der isolierten Ableitung ist wegen des dort auftretenden Feldstärkesprungs an der Grenzfläche zweier Isolierstoffe (isolierte Ableitung und Luft) bei der durch eine Blitzentladung induzierten Spannung von einigen 100 kV bis zu 1000 kV sehr groß. Diese hohe Feldstärke führt zu Vorentladungen auf der Oberfläche des Isolierstoffes der isolierten Ableitung, insbesondere im Bereich der Fangeinrichtung.

Eine Berührung eines elektrisch leitenden Gegenstandes mit der Isolation der Ableitung, beispielsweise eine geerdete metallische Halterung zur Befestigung der isolierten Ableitung, führt zu Vorentladungen an den Kanten der metallischen Halterung. Aus der Existenz solcher Vorentladungen kommt es zur Ausbildung von Gleitentladungen auf der Oberfläche des isolierten Leiters. Solche Gleitentladungen bilden sich bereits bei kleiner Spannung aus und dringen auf der Oberfläche der Isolation entlang bis zur Fangeinrichtung vor, bilden einen elektrisch leitenden Kurzschluss der Fangeinrichtung mit der geerdeten metallischen Halterung und machen den Effekt der isolierten Ableitung wieder zunichte.

Bei komplexen Installationen ist die Vermeidung einer Berührung der isolierten Ableitung mit einem geerdeten metallischen Gegenstand praktisch nicht zu vermeiden.

Bei den in den eingangs bezeichneten Druckschriften vorgeschlagenen Lösungen wird ein isoliertes Kabel mit einer Beschichtung aus einem schwach leitenden Werkstoff verwendet sowie ein spezieller Kabelendverschluss zur Vermeidung von Gleitentladungen im Bereich des Anschlusses an die Fangstange. Auch bei einer solchen Lösung können die oben beschriebenen Nachteile nicht vollständig beseitigt werden. Es treten auch bei einer Beschichtung mit einem schwach leitenden Werkstoff die oben beschriebenen Vorentladungen an den Klemmen und im Bereich der Fangeinrichtung auf. Eine mehrfache Beanspruchung durch solche Vorentladungen führt zum Durchschlag der isolierten Ableitung.

Ausgehend von diesem Stand der Technik liegt der Erfindung die Aufgabe zugrunde, eine Blitzstromableitvorrichtung zu schaffen, bei der eine vorentladungsfreie und gleitentladungsfreie Ausführung und Befestigung einer isolierten Ableitung ermöglicht ist. Zudem soll auf die Ausführung eines Endverschlusses verzichtet werden können.

Zur Lösung dieser Aufgabe schlägt die Erfindung vor, dass der Fangeinrichtung zugewandten Endbereich der Isolierung und der diese umgebenden Schicht eine Anschlusskappe oder dergleichen Bauteil aus elektrisch leitendem Material, insbesondere Metall, angeordnet ist, mittels dessen die Fangeinrichtung und/oder der elektrische Leiter mit der Schicht verbunden ist, und/oder dass am der Erdungsanlage zugewandten Endbereich der Isolierung und der diese umgebenden Schicht eine Anschlusskappe oder dergleichen Bauteil aus elektrisch leitendem Material, insbesondere Metall, angeordnet ist, mittels dessen der elektrische Leiter und/oder die Erdungsanlage mit der die Isolierung umgebenden Schicht verbunden ist.

Insbesondere ist vorgesehen, dass die Isolierung von einem Material mit einer polymerem Matrix und einem teilchenförmigen Füllstoff, der Zinkoxidpulver, insbesondere dotiertes Zinkoxid-Varistor-Pulver, umfasst, umgeben ist.

Zur Vermeidung von Gleitentladungen an der isolierten Ableitung und zur Vermeidung eines Endverschlusses und dessen Montage ist der elektrische Leiter mit einem Isolierstoff umgeben und zusätzlich mit einer durchgehenden Schicht eines Materials umgeben, welches ein nicht-lineares elektrisches Verhalten aufweist und folgende Eigenschaften hat:
Das Material zeigt einen stark spannungsabhängigen Widerstand, wobei dieser mit steigender Feldstärke in nicht-linearer Weise abnimmt.

Im Normalzustand wirkt das nicht-lineare elektrische Material als Isolator. Im Falle eines Blitzeinschlages wirkt das Material im Bereich der hohen elektrischen Feldstärke nahezu als niederohmiger elektrischer Leiter.

Die sich derart einstellende nicht-lineare Leitfähigkeit gewährleistet, dass im Falle einer Berührung oder einer Halterung der Ableitung mit einem geerdeten metallischen Gegenstand sich keine Gleitentladungen ausbilden.

Ein Kabelendverschluss entfällt bei einer solchen Lösung. Es ist lediglich ein Anschluss der nicht-linearen elektrischen Beschichtung an den elektrischen Leiter und an die Fangeinrichtung beziehungsweise an die Erdungsanlage erforderlich. Als Wirkung tritt hierbei der Effekt auf, dass durch die Nichtlinearität des Umhüllungsmaterials die Leitfähigkeit intrinsisch von dem Hochspannungsanschluss abnimmt. Damit wird ein stetiger Abbau kritischer Feldstärken erreicht.

Vorteilhafte Weiterbildungen sind in den Ansprüchen 3 bis 13 angegeben.

Es gibt varistorartige Kompositmaterialien, welche ihre Nichtlinearität α lediglich durch den Partikel-Partikel-Kontakt erhalten und bei denen die α- Werte klein sind. Dies ist im Unterschied zu Anspruch 6, wonach die Partikel durch einen Sinterprozess hergestellt werden und dadurch Korngrenzen mit stark nicht-linearen elektrischen Kennlinien erhalten. Derartige "Mikrovaristoren" sollen hier verwendet werden. Sie können bevorzugt auf der Basis von dotiertem ZnO hergestellt werden, aber auch aus dotiertem SnO2 oder anderen Halbleitermaterialien.

Es ist möglich, dass ein zweiter Füllstoff gemäß Anspruch 5 eingesetzt wird, um den Füllstoffgehalt an Mikrovaristoren zu reduzieren und die Extrudierbarkeit des Materials zu steigern. Auch ist denkbar, dass die Oberflächen der Mikrovaristoren mit angesinterten Ag-Partikeln versehen werden, um die Kontaktwiderstände zwischen den Partikeln zu reduzieren.

Bei dem Material gemäß Anspruch 5 handelt es sich vorzugsweise um dotierten ZnO- Füllstoff. Bei den leitenden oder halbleitenden Füllstoffen mit konstanter, spannungsabhängiger Leitfähigkeit kann es sich zum Beispiel um MnO2, Ruß oder auch Silberpartikel handeln.

Füllstoffe zur mechanischen Verstärkung können zum Beispiel Kurzfasern, mineralische Füllstoffe oder andere Nanopartikel sein.

Durch die Maßnahme gemäß Anspruch 9 wird ein Schutz gegen UV, Regen, Ozon, Chemikalien, mechanische Belastung, Beschädigung durch Mensch oder Tiere (z.B. Marder), generelle Umwelteinflüsse etc erreicht.

Durch die Maßnahme gemäß Anspruch 11 lässt sich der Aufwand für eine Halterung der Fangeinrichtung vereinfachen.

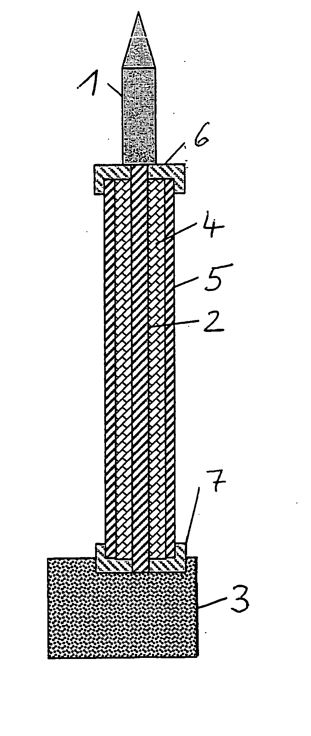

Die Erfindung ist anhand eines schematisierten Ausführungsbeispieles erläutert. Die Zeichnung zeigt eine erfindungsgemäße Anordnung im Schnitt gesehen.

In der Zeichnung ist eine Blitzstromableitvorrichtung gezeigt. Sie besteht aus einer Fangeinrichtung 1, die über einen elektrischen Leiter 2 mit einer Erdungsanlage 3 verbunden ist. Der elektrische Leiter 2 ist von einer Isolierung 4 umgeben. Erfindungsgemäß ist diese Isolierung 4 von einer durchgehenden Schicht 5 aus einem Material umgeben, welches ein nicht-lineares elektrisches Verhalten aufweist. Die Isolierung kann beispielsweise aus einer polymeren Matrix und einem teilchenförmigen Füllstoff in Form von Zinkoxid-Pulver bestehen. Insbesondere ist mit dotiertem Zinkoxid-Pulver gefülltes Silikon, Elastomer Thermoplast, Duroplast oder ähnliches Isolationsmaterial geeignet. Am der Fangeinrichtung 1 zugewandten Endbereich der Isolierung 4 und der diese umgebende Schicht 5 ist eine Anschlusskappe 6 installiert, die die Fangeinrichtung 1, den elektrischen Leiter 2 und die Schicht 5 miteinander elektrisch leitend verbindet. Der Halter ist beispielsweise aus Metall gefertigt. Ebenso ist am unteren Ende der Blitzstromableitvorrichtung eine Kappe 7 aus elektrisch leitendem Material vorgesehen, mittels derer der elektrische Leiter 2 und die Erdungsanlage 3 mit der die Isolierung 4 umgebenden Schicht 5 verbunden ist. Es ist auch möglich, die nicht-lineare Beschichtung 5 durch eine Schutzschicht, z.B. gegen Umwelteinflüsse oder für den Einbau in ein Bauwerk etc, zu umhüllen. Vorzugsweise wird der Schirm aus Metalloxid (Schicht 5) oben etwa 1 bis 2 Meter unterhalb der Fangstange mit dem Potential eines dort angeordneten Potentialausgleichsystem verbunden.

Auf diese Weise wird eine hervorragende isolierte Ableitung ohne Endverschluss zur Verfügung gestellt.

Die Erfindung ist nicht auf das Ausführungsbeispiel beschränkt, sondern im Rahmen der Offenbarung vielfach variabel.

## Patentansprüche

1. Blitzstromableitvorrichtung, bestehend aus einer Fangeinrichtung (1), die über einen elektrischen Leiter (2) mit einer Erdungsanlage (3) verbunden ist, wobei der elektrische Leiter (2) von einer Isolierung (4) umgeben ist, wobei die Isolierung (4) von einer in Längsrichtung durchgehenden Schicht (5) aus einem Material umgeben ist, das ein nicht-lineares elektrisches Verhalten aufweist, **dadurch gekennzeichnet, dass** am der Fangeinrichtung (1) zugewandten Endbereich der Isolierung (4) und der diese umgebenden Schicht (5) eine Anschlusskappe (6) oder dergleichen Bauteil aus elektrisch leitendem Material, insbesondere Metall, angeordnet ist, mittels dessen die Fangeinrichtung (1) und/oder der elektrische Leiter (2) mit der Schicht (5) verbunden ist, und/oder dass am der Erdungsanlage (3) zugewandten Endbereich der Isolierung (4) und der diese umgebenden Schicht (5) eine Anschlusskappe (7) oder dergleichen Bauteil aus elektrisch leitendem Material, insbesondere Metall, angeordnet ist, mittels dessen der elektrische Leiter (2) und/oder die Erdungsanlage (3) mit der die Isolierung (4) umgebenden Schicht (5) verbunden ist.

2. Blitzstromableitvorrichtung nach Anspruch 1, **dadurch gekennzeichnet, dass** die Isolierung (4) von einem Material (5) mit einer polymerem Matrix und einem teilchenförmigen Füllstoff, der Zinkoxidpulver, insbesondere dotiertes Zinkoxid- Varistor- Pulver, umfasst, umgeben ist, oder dass der teilchenförmige Füllstoff mit Material (5) aus einem oder mehreren anderen Oxiden oder aus Karbiden, Nitriden, Boriden, Chalkogeniden besteht, welche zu einem Material (5) führen mit ausgeprägten nicht-linearen Varistoreigenschaften wie zum Beispiel dotiertes SnO2, SiC.

3. Blitzstromableitvorrichtung nach einem der Ansprüche 1 bis oder 2, **dadurch gekennzeichnet, dass** das Material (5) neben (dotiertem) ZnO- Füllstoff noch weitere Füllstoffe enthalten kann, wie zum Beispiel leistende oder halbleitende Füllstoffe mit konstanter spannungsunabhängiger Leitfähigkeit, Additive für Flammschutz und/oder Verarbeitung und/oder zur Stabilisierung gegen Umwelteinflüsse, Füllstoffe zur mechanischen Verstärkung.

4. Blitzstromableitvorrichtung nach einem der Ansprüche 1 bis 3, **dadurch gekennzeichnet, dass** der dotierte Füllstoff so hergestellt ist, dass jedes Füllstoffpartikel an sich schon eine nicht-lineare, varistorartige Strom(T)-Spannung(U)-Kennlinie zeigt, der Übergang vom isolierenden zum nicht-linearen Bereich gezielt eingestellt werden kann und die NichtLinearität α > 3 ist.

5. Blitzstromableitvorrichtung nach einem der Ansprüche 1 bis 4, **dadurch gekennzeichnet, dass**
- die Schicht (5) einen Füllstoffanteil von dotiertem ZnO im Bereich von 10-80 Volumen-% aufweist,
- die Schicht (5) einen Füllstoff mit Partikelgrößen im Bereich von 4-160 µm aufweist,
- die Partikel von kugeliger Form sein können oder aus Bruchstücken von Voll- und Hohlkugeln oder massiver Varistor- Keramik bestehen,
- die Schicht (5) eine Polymermatrix aufweist aus: Silikon, EPDM, EPR, thermoplastischem Elastomer, Mischungen von diesen Elastomeren, Thermoplasten oder Duromeren.

6. Blitzstromableitvorrichtung nach einem der Ansprüche 1 bis 5, **dadurch gekennzeichnet, dass** die Schicht (5) bezüglich ihres nicht-linearen elektrischen Verhaltens zur Ableitung von Blitzstromspannungen entlang des elektrischen Leiters ausgelegt ist und den isolierten Leiter in Umfangsrichtung voll oder auch nur segmentweise umschließt.

7. Blitzstromableitvorrichtung nach einem der Ansprüche 1 bis 6, **dadurch gekennzeichnet, dass** die Schicht (5) ein- oder mehrlagig sein kann und sich die Leitfähigkeit der einzelnen Schichten unterscheiden können.

8. Blitzstromableitvorrichtung nach einem der Ansprüche 1 bis 7, **dadurch gekennzeichnet, dass** die Schicht (5) eine Dicke im Bereich von 0,05- 10 mm aufweist, vorzugsweise 0,2-5 mm.

9. Blitzstromableitvorrichtung nach einem der Ansprüche 1 bis 8, **dadurch gekennzeichnet, dass** die Schicht (5) von einer isolierenden oder hochohmigen/halbleitenden Schutzschicht umgeben ist.

10. Blitzstromableitvorrichtung nach einem der Ansprüche 1 bis 9, **dadurch gekennzeichnet, dass** der isolierte Leiter verschiedene Querschnittsformen aufweist, zum Beispiel rund, flach oval und massiv sein kann oder aus mehreren Teilleitern bestehen kann.

11. Blitzstromableitvorrichtung nach einem der Ansprüche 1 bis 10, **dadurch gekennzeichnet, dass** die isolierende Schicht (4) und/oder die zusätzlich aufgebrachte Schutzschicht als mechanisch tragendes Element ausgeführt ist, zum Beispiel als glasfaser-verstärkter Kunststoff.

12. Blitzstromableitvorrichtung nach einem der Ansprüche 1 bis 11, **gekennzeichnet durch** eine durchgehende oder auch aus Modulen aufbaubare Einrichtung zur Blitzstromableitung.

13. Blitzstromableitvorrichtung nach einem der Ansprüche 1 bis 12, **dadurch gekennzeichnet, dass** die Schicht (5) aufextrudiert, aufgeschrumpft oder auflackiert ist.

## Claims

1. Lightning current conducting device, consisting of an intercepting device (1) which is connected via an electrical conductor (2) to an earthing device (3), wherein the electrical conductor (2) is surrounded by insulation (4), wherein the insulation (4) is surrounded by a layer (5), running in the longitudinal direction, of a material that demonstrates non-linear electrical behaviour,
**characterised in that**
arranged at the end area of the insulation (4) facing the intercepting device (1), and of the layer (5) surrounding this, is a connection cap (6) or similar component of electrically conductive material, in particular metal, by means of which the intercepting device (1) and/or the electrical conductor (2) is connected to the layer (5),
and/or that arranged at the end area of the insulation (4) facing the earthing device (3), and of the layer (5) surrounding this, is a connection cap (7) or similar component of electrically conductive material, in particular metal, by means of which the electrical conductor (2) and/or the earthing device (3) is connected to the layer (5) that surrounds the insulation (4).

2. Lightning current conducting device according to claim 1,
**characterised in that** the insulation (4) is surrounded by a material (5) with a polymer matrix and a particulate filling material that comprises zinc oxide powder, in particular doped zinc oxide varistor powder, or that the particulate filling material comprises material (5) of one or more other oxides or carbides, nitrides, borides, chalkogenides etc., which lead to a material (5) with marked non-linear varistor characteristics such as for example doped Sn02, SiC.

3. Lightning current conducting device according to one of the claims 1 or 2,
**characterised in that** in addition to the (doped) ZnO filling material, the material (5) can also contain other filling materials, such as for example conductive or semi-conductive filling materials with constant voltage-independent conductivity, additives for flame protection and/or processing and/or for stabilisation against environmental influences, filling materials for mechanical reinforcement.

4. Lightning current conducting device according to one of the claims 1 to 3,
**characterised in that** the doped filling material is manufactured in such a way that each filling material particle essentially already has a non-linear, varistor-like current(T)-voltage(U) characteristic curve, the transition from the insulating to the non-linear range can be set in a targeted manner, and the nonlinearity a is > 3.

5. Lightning current conducting device according to one of the claims 1 to 4,
**characterised in that**
- the layer (5) has a filling material proportion of doped ZnO in the range of 10-80 % by volume,
- the layer (5) has a filling material with particle sizes in the range from 4-160 µm,
- the particles can be of a spherical form, or can consist of fragments of whole spheres and hollow spheres, or solid varistor ceramic,
- the layer (5) has a polymer matrix of: silicon, EPDM, EPR, thermoplastic elastomer, blends of these elastomers, thermoplasts or duromers.

6. Lightning current conducting device according to one of the claims 1 to 5,
**characterised in that** with regard to its non-linear electrical behaviour, for conducting lightning current voltages the layer (5) is designed to run along the electrical conductor and surrounds the insulated conductor in the circumferential direction fully or just in segments.

7. Lightning current conducting device according to one of the claims 1 to 6,
**characterised in that** the layer (5) can be of a single layer or multi-layered, and the conductivity of the individual layers can differ.

8. Lightning current conducting device according to one of the claims 1 to 7,
**characterised in that** the layer (5) has a thickness in the range from 0.05-10 mm, preferably 0.2-5mm.

9. Lightning current conducting device according to one of the claims 1 to 8,
**characterised in that** the layer (5) is surrounded by an insulating or high-resistance/semi-conductive protective layer.

10. Lightning current conducting device according to one of the claims 1 to 9,
**characterised in that** the insulated conductor can have various cross-sectional shapes, for example round, flat oval and solid, or can comprise several part-conductors.

11. Lightning current conducting device according to one of the claims 1 to 10,
**characterised in that** the insulating layer (4) and/or the additionally applied protective layer is executed as a mechanically load-bearing element, for example fibreglass-reinforced plastic.

12. Lightning current conducting device according to one of the claims 1 to 11,
**characterised by** a device for conducting lighting current that is continuous or that can be constructed from modules.

13. Lightning current conducting device according to one of the claims 1 to 12,
**characterised in that** the layer (5) is extruded, shrunk or lacquered onto it.

## Revendications

1. Dispositif de dérivation de courant de foudre, composé d'un dispositif de collecte (1) qui est relié à l'installation de mise à la terre (3) par un conducteur électrique (2), le conducteur électrique (2) étant entouré par une isolation (4), l'isolation (4) étant entourée par une couche (5) continue en direction longitudinale et constituée d'un matériau qui présente un comportement électrique non linéaire, **caractérisé en ce qu'**à la zone d'extrémité de l'isolation (4) et de la couche (5) entourant celle-ci tournée vers le dispositif de collecte (1) est disposé un chapeau de raccordement (6) ou un élément analogue en matériau électroconducteur, en particulier en métal, au moyen duquel le dispositif de collecte (1) et/ou le conducteur électrique (2) est relié à la couche (5), et/ou qu'à la zone d'extrémité de l'isolation (4) et de la couche (5) entourant celle-ci tournée vers l'installation de mise à la terre (3) est disposé un chapeau de raccordement (7) ou un élément analogue en matériau électroconducteur, en particulier en métal, au moyen duquel le conducteur électrique (2) et/ou l'installation de mise à la terre (3) est relié(e) à la couche (5) entourant l'isolation (4).

2. Dispositif de dérivation de courant de foudre selon la revendication 1, **caractérisé en ce que** l'isolation (4) est entourée par un matériau (5) composé d'une matrice polymère et d'une matière de remplissage particulaire qui comprend de la poudre d'oxyde de zinc, en particulier de la poudre de varistance à oxyde de zinc dopé, ou que la matière de remplissage particulaire est composée de matériau (5) en un ou plusieurs autres oxydes ou en carbures, nitrures, borures, chalcogénures, etc. qui conduisent à un matériau (5) ayant des propriétés de varistance non linéaires marquées, comme par exemple Sn02, SiC dopé.

3. Dispositif de dérivation de courant de foudre selon l'une des revendications 1 ou 2, **caractérisé en ce que** le matériau (5) peut contenir, en plus de la matière de remplissage au ZnO (dopé), d'autres matières de remplissage comme par exemple des matières de remplissage conductrices ou semi-conductrices de conductivité constante indépendante de la tension, des additifs pour la résistance à la flamme et/ou la mise en oeuvre et/ou la stabilisation contre les influences de l'environnement, des matières de remplissage pour le renforcement mécanique.

4. Dispositif de dérivation de courant de foudre selon l'une des revendications 1 à 3, **caractérisé en ce que** la matière de remplissage dopée est réalisée de manière que chaque particule de matière de remplissage présente intrinsèquement déjà une caractéristique courant(I)-tension (U) non linéaire de type varistance, que la transition de la zone isolante à la zone non linéaire puisse être réglée de manière ciblée et que la non-linéarité α soit > 3.

5. Dispositif de dérivation de courant de foudre selon l'une des revendications 1 à 4, **caractérisé en ce que**
- la couche (5) présente une proportion de matière de remplissage en ZnO dopé comprise entre 10 et 80 % en volume,
- la couche (5) présente une matière de remplissage avec une taille de particules comprise entre 4 et 160 µm,
- les particules peuvent être de forme sphérique (billes pleines et creuses) ou composées de fragments de billes pleines et creuses ou de céramique de varistance massive,
- la couche (5) présente une matrice polymère en : silicone, EPDM, EPR, élastomère thermoplastique, mélanges de ces élastomères, thermoplastiques ou duromères.

6. Dispositif de dérivation de courant de foudre selon l'une des revendications 1 à 5, **caractérisé en ce** la couche (5) est conçue, en ce qui concerne son comportement électrique non linéaire, pour dériver des tensions de courant de foudre le long du conducteur électrique et entoure le conducteur isolé entièrement ou seulement par segments en direction périphérique.

7. Dispositif de dérivation de courant de foudre selon l'une des revendications 1 à 6, **caractérisé en ce que** la couche (5) peut être mono- ou multicouche et la conductivité des différentes couches peut être différente.

8. Dispositif de dérivation de courant de foudre selon l'une des revendications 1 à 7, **caractérisé en ce que** la couche (5) présente une épaisseur comprise entre 0,05 et 10 mm, de préférence entre 0,2 et 5 mm.

9. Dispositif de dérivation de courant de foudre selon l'une des revendications 1 à 8, **caractérisé en ce que** la couche (5) est entourée par une couche protectrice isolante ou à haute résistance/semi-conductrice.

10. Dispositif de dérivation de courant de foudre selon l'une des revendications 1 à 9, **caractérisé en ce que** le conducteur isolé présente différentes formes de section, par exemple ronde, ovale plate et peut être massif ou composé de plusieurs conducteurs partiels.

11. Dispositif de dérivation de courant de foudre selon l'une des revendications 1 à 10, **caractérisé en ce que** la couche isolante (4) et/ou la couche protectrice appliquée en plus est réalisée sous forme d'élément de support mécanique, par exemple en matière plastique renforcée par fibres de verre.

12. Dispositif de dérivation de courant de foudre selon l'une des revendications 1 à 11, **caractérisé par** un dispositif pour la dérivation de courant de foudre continu ou constructible à partir de modules.

13. Dispositif de dérivation de courant de foudre selon l'une des revendications 1 à 12, **caractérisé en ce que** la couche (5) est appliquée par extrusion, frettage ou peinture.
